# EUROPÄISCHE PATENTSCHRIFT

(11) **EP 2 604 481 B1**
(45) Veröffentlichungstag und Bekanntmachung des Hinweises auf die Patenterteilung: **16.03.2016**
(21) Anmeldenummer: 12196644.4
(22) Anmeldetag: 12.12.2012
(51) Int. Cl.: B60R 25/0215

(54) **Verrieglungseinrichtung für ein Fahrzeug, Fahrzeug und Verfahren zum Sichern eines Fahrzeugs**
Locking device for a vehicle, vehicle and method for securing a vehicle
Dispositif de verrouillage pour un véhicule, véhicule et procédé de sécurisation d'un véhicule

(30) Priorität: 17.12.2011 DE 102011121426; 27.08.2012 DE 102012016933
(43) Veröffentlichungstag der Anmeldung: 19.06.2013
(73) Patentinhaber: Volkswagen Aktiengesellschaft, 38440 Wolfsburg (DE); Marquardt GmbH, 78604 Rietheim-Weilheim (DE)
(72) Erfinder: Hahn, Erik, 38550 Isenbüttel (DE); Algermissen, Michael, 30449 Hannover (DE); Mateja, Darius, 78594 Gunningen (DE); Dr. Mench, Andree, 38304 Wolfenbüttel (DE); Willmann, Hubert, 78199 Bräunlingen (DE); Kaplan, Ali, 88512 Mengen (DE)

(56) Entgegenhaltungen:
- EP-A1- 1 602 538
- EP-A1- 2 048 045
- DE-A1-102011 012 040
- GB-A- 2 459 042

## Beschreibung

Die Erfindung betrifft eine Verrieglungseinrichtung für ein Fahrzeug, ein Fahrzeug und ein Verfahren zum Sichern eines Fahrzeugs. Die Erfindung betrifft insbesondere derartige Verriegelungseinrichtungen und Verfahren zum mechanischen Blockieren einer Lenkradwelle.

Lenkschlösser zum Verriegeln bzw. zum mechanischen Blockieren der Lenkradwelle, die in der Lenkradsäule in einem Fahrzeug angeordnet ist, werden verwendet, um den Diebstahlschutz zu erhöhen. Eine derartige Lenkungsverriegelung wird bei Betätigung Zündschlosses im Fahrzeug ver- und/oder entriegelt.

Elektrische und/oder elektronische Lenkschlösser werden eingesetzt, bei denen die Lenkungsverriegelung elektrisch steuerbar, beispielsweise durch einen Elektromotor oder einen Elektromagneten, angetrieben wird. Eine Entriegelung kann selektiv abhängig von einer Zugangsberechtigung erfolgen. Beispielsweise kann eine Steuerung so ausgestaltet sein, dass der Elektromotor oder der Elektromagnet nur dann zur Entriegelung aktiviert wird, wenn eine Zugangsberechtigung eines Schlüssels oder Schlüsselersatzes als gültig erkannt wird. Eine derartige Verriegelungseinrichtung kann eine bewegbare Sperre umfassen, mit der die Lenkradwelle selektiv verriegelt werden kann. Der Sperre steht in einer Sperrposition in blockierenden Eingriff mit der Lenkradwelle und steht in einer Freigabeposition außer Eingriff mit der Lenkradwelle.

Die Sperre kann mit einem mechanischen Vorspannmittel, beispielsweise einer Feder oder einem anderen elastischen Element, in Richtung eines Sperrkranzes vorgespannt sein. Ein Ende der Sperre kann in Aussparungen zwischen Zähne des Sperrkranzes eingreifen, um den Sperrkranz zu blockieren. Es besteht das Risiko, dass die Verriegelungseinrichtung durch einen manipulierenden Eingriff, bei dem die Sperre gegen die Federkraft angehoben wird, entriegelt werden kann. Ein derartiges Risiko kann insbesondere dann bestehen, wenn aus technischen Gründen eine Öffnung in der Lenksäule vorgesehen ist, die das Einführen eines länglichen Werkzeugs erlaubt. Das Weglassen oder Abdecken einer derartigen Öffnung bringt technische Beschränkungen mit sich. Selbst falls keine Öffnung in der Lenksäule vorgesehen ist, besteht das Risiko, dass die Verriegelungseinrichtung durch einen manipulierenden Eingriff, bei dem ein Prellschlag auf die Lenkradwelle ausgeübt wird, entriegelt werden kann.

Zur Unterbindung derartiger Manipulationen kann eine Sicherungseinrichtung vorgegehen sein, die die Sperre vor einer Bewegung aus der Sperrposition in die Freigabeposition durch einen unberechtigten äußeren Eingriff schützt. Die Sicherungseinrichtung kann eine Bewegung der Sperre verhindern, wenn sich die Sperre in der Sperrposition befindet. Um die Verriegelungseinrichtung in den entriegelten Zustand zu überführen, muss die Sicherungseinrichtung die Sperre freigeben. Dies kann durch einen aktiven Antrieb der Sicherungseinrichtung erfolgen. Selbst wenn der Antrieb, der die Sperre zwischen der Sperrposition und der Freigabeposition überführt, auch zum Bewegen der Sicherungseinrichtung eingesetzt wird; ist eine zusätzliche Mechanik nötig, die die Sicherungseinrichtung mit dem Antrieb koppelt. Diese zusätzliche Mechanik benötigt zusätzlichen Bauraum und Verursacht weitere Kosten. Ein Ausfall der zusätzlichen Mechanik kann dazu führen, dass das Lenkschloss nicht mehr entriegelt werden kann. In diesem Fall wäre kein Motorstart mehr möglich, so dass das Ausfallrisiko für einen Betrieb des Fahrzeugs erhöht werden kann.

Die DE 10 2011 012 040 A1, die als Grundlage für den Oberbegriff der unabhängigen Ansprüche dient, offenbart eine Verriegelungseinrichtung für ein Kraftfahrzeug. Ein Sperrbolzen wird selektiv in Eingriff und außer Eingriff mit einem Sperrkranz gebracht. Der Sperrbolzen wird über ein Schneckengetriebe angetrieben. Die Verriegelungseiririchtung weist einen Sicherungsschieber auf, der den Sperrbolzen in der Position sichert, in der er außer Eingriff mit dem Sperrkranz steht.

Die EP 1 602 538 A1 und die EP 2 048 045 A1 offenbaren weitere Beispiele für Verriegelungseinrichtungen mit motorisch angetriebenen Spertgliedern.

Die DE 199 23 797 A1 offenbart ein Fahrzeugschloss mit einer Diebstahisicherung, bei dem ein Sicherungsbolzen ein Sperrstück in seiner sperrenden Stellung blockieren kann. Der Sicherungsbolzen wird ausgerückt, um das Fahrzeugschloss in die ursprüngliche Lage zurückzuführen.

Die DE 10 2007 059 713 A1 offenbart eine Vorrichtung zum Ansteuern eines Sperrglieds. Die Vorrichtung kann eine Sicherheitseinheit aufweisen, mit der ein Sperrglied in einer Entriegelungsstellung gesichert werden kann.

Die DE 102 47 802 B3 offenbart eine Vorrichtung zum Sperren einer Lenkspindel eines Kraftfahrzeugs. Ein Sperrbolzen ist in der Sperrstellung mit einem Sicherungsglied blockierbar. Das Sicherungsglied ist durch einen an einem Gehäuse gelagerten Stift gebildet.

Die DE 100 41 984 A1, DE 199 06 268 A1, DE 10 2004 031 238 A1, DE 10 2007 018 218 A1 und DE 10 2009 033 485 A1 offenbaren weitere Beispiele für Verriegelungseinrichtungen, bei denen ein Sperrglied mit einer Sicherungseinrichtung zusammenwirken kann.

Der Erfindung liegt die Aufgabe zugrunde, eine verbesserte Verriegelungseinrichtung und ein verbessertes Verfahren zum Sichern eines Fahrzeugs anzugeben. Der Erfindung liegt die Aufgabe zugrunde, eine Verriegelungseinrichtung und ein Verfahren anzugeben, das hohe Sicherheit gewährleistet und geringe Bauraumerfordernisse aufweist.

Diese Aufgabe wird erfindungsgemäß durch eine Verriegelungseinrichtung, ein Fahrzeug und ein Verfahren mit den in den unabhängigen Ansprüchen angegebenen Merkmalen gelöst. Die abhängigen Ansprüche definieren bevorzugte und vorteilhafte Ausführungsformen der Erfindung.

Eine Verrieglungseinrichtung für ein Fahrzeug nach einem Ausführungsbeispiel umfasst eine zwischen einer Sperrposition und einer Freigabeposition bewegbare Sperre. Die Sperre ist so ausgestaltet, dass sie in der Sperrposition in blockierendem Eingriff mit einem Gegenelement steht, um dieses gegen eine Drehung zu sichern, und in der Freigabeposition außer Eingriff mit dem Gegenelement steht. Die Verrieglungseinrichtung umfasst ein Überführungselement, das bewegbar ist, um die Sperre zwischen der Sperrposition und der Freigabeposition zu überführen. Die Verrieglungseinrichtung umfasst eine Sicherungseinrichtung zum Sichern der Sperre in der Sperrposition. Die Sicherungseinrichtung ist an dem Überfüfirungselement gelagert. Das Überführungselement und die Sicherungseinrichtung sind so ausgestaltet, dass eine Bewegung des Überführungselements zum Überführen der Sperre von der Sperrposition in die Freigabeposition eine Relativbewegung zwischen der Sicherungseinrichtung und der Sperre hervorruft, während die Sicherungseinrichtung beim Überführen der Sperre von der Sperrposition in die Freigabeposition in einer ersten Position relativ zu dem Überführungselement bleibt.

Bei der Verriegelungseinrichtung ist die Sicherungseinrichtung an dem Überführungselement gelagert. Die Bewegung des Überführungselements, die die Sperre in die Freigabeposition überführt, bewirkt gleichzeitig auch eine Relativbewegung zwischen der Sicherungseinrichtung und der Sperre. Während dieses Vorgangs bleibt die Sicherungseinrichtung relativ zu dem Überführungselement in derselben ersten Position. Es ist nicht erforderlich, die Sicherungseinrichtung relativ zu dem Überführungselement zu bewegen, um eine Bewegung der Sperre in die Freigabeposition zu erlauben. Die Sicherungseinrichtung muss nicht über eine separate Mechanik mit einem Antrieb gekoppelt werden, um unabhängig von dem Überführungselement bewegt werden zu können. Die Verriegelungseinrichtung hat eine kompakte und einfache Ausgestaltung und bietet Sicherheit gegen unbefugte Eingriffe in der verriegelten Position.

Das Überführungselement kann drehbar gelagert sein. An dem Überführungselement kann eine Hubkurve ausgebildet sein. Die Sperre kann wenigstens beim Überführen von der Sperrposition in die Freigabeposition an der Hubkurve anliegen, um entlang einer Achse translatorisch bewegt zu werden. Es kann ein elastisches Vorbelastungsmittel vorgesehen sein, mit dem die Sperre in Richtung des Gegenelements gedrückt wird. Eine derartige Konstruktion erlaubt eine kompakte Ausgestaltung der Verriegelungseinrichtung, bei der die erforderlichen Kräfte und Momente zum Bewegen der Sperre wirksam erzeugt werden können.

Die Sicherungseinrichtung kann relativ zu dem Überführungselement zwischen der ersten Position und einer zweiten Position bewegbar gelagert sein. Die Sicherungseinrichtung kann ausgestaltet sein, um in der ersten Position die Sperre gegen eine Bewegung von der Sperrposition in die Freigabeposition zu sichern, solange das Überführungselement unbewegt ist. Durch diese Ausgestaltung kann eine zuverlässige Sicherung der Sperre in der Sperrposition auch dann erfolgen, wenn die Sperre zunächst auf einem Vorsprung des Gegenelements aufsteht. Die Sicherungseinrichtung kann so geformt und so an dem Überführungselement gelagert sein, dass die Sperre die Sicherungseinrichtung von der ersten Position in die zweite Position überführt, wenn die Sperre auf einem Vorsprung des Gegenelements aufsteht und das Überführungselement in einer ersten Richtung angetrieben wird, um die Sperre in die Sperrposition zu überführen. Dadurch wird verhindert, dass die Sicherungseinrichtung und die Sperre die Bewegung des Überführungselements blockieren, wenn die Sperre auf einem Vorsprung des Gegenelements aufsteht. Durch Verdrehen des Gegenelements, das beispielsweise durch ein Drehen am Lenkrad verursacht werden kann, rastet die Sperre in eine Ausnehmung des Gegenelements ein und bewegt sich so in die Sperrposition. Dabei bewegt sich die Sicherungseinrichtung von der zweiten Position in die erste Position. Dadurch erfolgt eine Sicherung gegen Manipulation zuverlässig auch dann, wenn die Sperre anfangs auf einem Vorsprung des Gegenelements aufsteht.

Wenn die Sperre und das Gegenelement bei Beginn des Verriegelungsvorgangs bereits so relativ zueinander positioniert sind, dass die Sperre bei einer Bewegung entlang einer Achse in eine Ausnehmung zwischen Vorsprüngen des Gegenelements einfährt, bleibt die Sicherungseinrichtung auch beim Verriegelungsvorgang in der ersten Position relativ zu dem Überführungselement. Ein Abschnitt der Sperre, der an der Hubkurve des Gegenelements anliegt, fährt in diesem Fall beim Verriegelungsvorgang in einen Zwischenraum zwischen der Hubkurve des Überführungselements und der Sicherungseinrichtung ein.

Die Verriegelungseinrichtung kann ein elastisches Vorspannmittel zum Vorspannen der Sicherungseinrichtung in Richtung der ersten Position umfassen. Dadurch wird sichergestellt, dass sich die Sicherungseinrichtung zuverlässig in der ersten Position befindet, wenn sich die Sperre in der Sperrposition befindet, ohne dass dafür eine separate Mechanik zum Bewegen der Sicherungseinrichtung relativ zu dem Überführungselement erforderlich ist.

Die Sperre kann entlang einer Achse translatorisch bewegbar gelagert und eingerichtet sein, um die Sicherungseinrichtung abhängig von einer Position der Sperre entlang der Achse selektiv von der ersten Position in die zweite Position zu überführen. Auf diese Weise kann abhängig davon, ob die Sperre bei Beginn des Verriegelungsvorgangs auf einem Vorsprung des Gegenelements aufsteht oder nicht, ein unterschiedlicher Bewegungsablauf erfolgen, bei dem jeweils sichergestellt ist, dass die Sicherungseinrichtung den Verriegelungsvorgang nicht blockiert, und dass die Sicherungseinrichtung im verriegelten Zustand die Sperre in der Sperrposition sichert. Die Verriegelungseinrichtung kann so ausgestaltet sein, dass die Sperre die Sicherungseinrichtung beim Verriegelungsvorgang selektiv nur dann von der ersten Position in die zweite Position relativ zu dem Überführungselement bewegt, wenn die Sperre auf einem Vorsprung des Gegenelements aufsteht.

Die Sicherungseinrichtung kann so ausgestaltet sein, dass sie die Sperre entlang der Achse wenigstens teilweise überdeckt, wenn sich die Sperre in der Sperrposition befindet. Die Sicherungseinrichtung kann so ausgestaltet sein, dass sie von der Sperre entlang der Achse in einem Abstand angeordnet ist, wenn sich die Sperre in der Sperrposition befindet und wenn sich die Sicherungseinrichtung in der ersten Position befindet. Der Abstand kann kleiner als eine Höhe von Vorsprüngen sein, die an dem Gegenelement ausgebildet sind. Eine derartige Ausgestaltung bietet Sicherheit gegen Manipulation. Der Abstand kann so gewählt werden, dass die Sperre die Sicherungseinrichtung nicht berührt, wenn sie bei einem Entriegelungsvorgang durch Drehung des Überführungselements angehoben wird.

Die Sicherungseinrichtung kann eine Kopplungsfläche für einen Eingriff der Sperre aufweisen. Dadurch kann eine hemmungsfreie Bewegung der Sicherungseinrichtung in Kontakt mit der Sperre hervorgerufen werden. Die Kopplungsfläche der Sicherungseinrichtung, die beim Verriegelungsvorgang entlang der Sperre gleiten kann, kann einen sich verändernden Krümmungsradius aufweisen. Wenigstens ein Teil der Kopplungsfläche kann einen Krümmungsradius aufweisen, der gleich einem Abstand desjenigen Abschnitts der Sperre, der die Kopplungsfläche berührt, von einer Drehachse des Überführungselements ist. Bei weiteren Ausgestaltungen kann die Kopplungsfläche eine geradlinige Kante der Sicherungseinrichtung sein.

Das Überführungselement kann um eine Drehachse drehbar gelagert sein, die parallel zu der Achse ist, entlang der die Sperre translatorisch bewegbar ist. Die Sicherungseinrichtung kann in einer Ebene senkrecht zu der Drehachse zwischen der ersten Position und der zweiten Position bewegbar sein. Dies erlaubt eine kompakte Ausgestaltung der Verriegelungseinrichtung.

Die Sicherungseinrichtung kann translatorisch verschiebbar an dem Überführungselement gelagert sein. Das Überführungselement kann eine Führung für die Sicherungseinrichtung aufweisen. Dies erlaubt eine einfache und robuste Ausgestaltung der Sicherungseinrichtung.

Die Sicherungseinrichtung kann verschwenkbar an dem Überführungselement gelagert sein. Dies erlaubt eine einfache Ausgestaltung, bei der die Sicherungseinrichtung um eine Mittelachse des Überführungselements schwenkbar gelagert ist.

Die Sicherungseinrichtung kann eine passive Sicherungseinrichtung sein. Das heißt, die Sicherungseinrichtung ist mit keinem Antrieb gekoppelt, der aktiv eine Bewegung relativ zu dem Überführungselement zwischen der ersten Position und der zweiten Position hervorrufen kann. Eine derartige Bewegung zwischen der ersten Position und der zweiten Position wird vielmehr durch die Sperre im Zusammenspiel mit der Bewegung des Überführungselements beim Verriegelungsvorgang hervorgerufen. Die Anzahl erforderlicher mechanischer Komponenten und deren Komplexität kann somit gering gehalten werden.

Wenigstens ein Abschnitt der Sicherungseinrichtung kann in einem Hohlraum des Überführungselements aufgenommen sein. Durch derartige Integration der Sicherungseinrichtung in das Überführungselement können Bauraumerfordernisse weiter verringert werden.

Die Verriegelungseinrichtung kann einen Antrieb umfassen, der mit dem Überführungselement gekoppelt ist. Das Überführungselement kann an seinem Außenumfang ein Schneckenrad aufweisen, das mit einer Schnecke gekoppelt ist. Die Schnecke kann durch den Antrieb drehend antreibbar sein. Der Antrieb kann einen Elektromotor umfassen. Die Verriegelungseinrichtung kann eine Steuerung umfassen, die eingerichtet ist, um den Antrieb so zu steuern, dass das Überführungselement bei einem Verriegelungsvorgang in eine erste Richtung angetrieben wird und bei einem Entriegelungsvorgang in eine entgegengesetzte zweite Richtung angetrieben wird. Dadurch können in einen kompakten Bauraum die erforderlichen Kräfte und Momente bereitgestellt werden, die für eine Ver- und Entriegelung benötigt werden.

Nach einem weiteren Ausführungsbeispiel wird ein Fahrzeug angegeben, das ein Lenkrad mit einer Lenkradwelle und eine Verriegelungseinrichtung nach einem Ausführungsbeispiel umfasst. Das Gegenelement ist an der Lenkradwelle angebracht. Die Verriegelungseinrichtung wirkt als Lenkschloss.

Das Fahrzeug bietet eine hohe Sicherheit gegen Diebstahl, wobei die Verriegelung mit einer einfachen und kompakten Ausgestaltung erreicht wird.

Nach einem weiteren Ausführungsbeispiel wird ein Verfahren zum Sichern eines Fahrzeugs angegeben. Das Verfahren umfasst ein Antreiben eines Überführungselements in eine erste Richtung, um eine Sperre in eine Sperrposition zu überführen, in der sie in blockierendem Eingriff mit einem Gegenelement steht, um dieses gegen eine Drehung zu sichern. Das Verfahren umfasst ein Antreiben des Überführungselements in eine zweite Richtung, um die Sperre in eine Freigabeposition zu überführen, in der sie außer Eingriff mit dem Gegenelement steht. An dem Überführungselement ist eine Sicherungseinrichtung zum Sichern des Sperrelements in der Sperrposition gelagert. Beim Antreiben des Überführungselements in die zweite Richtung wird eine Relativbewegung zwischen der Sicherungseinrichtung und der Sperre hervorgerufen, während die Sicherungseinrichtung in einer ersten Position relativ zu dem Überführungselement bleibt.

Das Verfahren bietet eine hohe Sicherheit gegen Diebstahl, wobei die Verriegelung und Sicherung der Sperre mit einer einfachen und kompakten Ausgestaltung erreicht wird.

Bei dem Verfahren kann beim Antreiben des Überführungselements in die zweite Richtung die Sicherungseinrichtung abhängig davon, ob die Sperre auf einem Vorsprung des Gegenelements aufsteht, selektiv von der ersten Position in eine zweite Position relativ zu dem Überführungselement bewegt werden. Dadurch wird ein Blockieren einer Bewegung des Überführungselements, wenn die Sperre auf einem Vorsprung des Gegenelements aufsteht, verhindert.

Das Verfahren kann mit einer Verriegelungseinrichtung nach einem Ausführungsbeispiel durchgeführt werden. Ausgestaltungen des Verfahrens und die damit jeweils erzielten Wirkungen entsprechen den Ausgestaltungen der Verriegelungseinrichtung nach verschiedenen Ausführungsbeispielen.

Die Erfindung wird nachfolgend unter Bezugnahme auf die beigefügten Zeichnungen anhand von Ausführungsbeispielen detaillierter beschrieben werden.
Fig. 1 zeigt Komponenten eines Lenkschlosses, bei dem eine Verriegelungseinrichtung nach einem Ausführungsbeispiel verwendet werden kann.
Fig. 2 zeigt eine Perspektivansicht einer Verriegelungseinrichtung nach einem Ausführungsbeispiel.
Fig. 3 zeigt eine teilweise Explosionsansicht der Verriegelungseinrichtung.
Fig. 4 zeigt eine Schnittansicht der Verriegelungseinrichtung in einer Ebene, in der sich eine Sicherungseinrichtung bewegt.
Fig. 5 zeigt eine Schnittansicht der Verriegelungseinrichtung in einer Ebene senkrecht zu der Ebene, in der sich die Sicherungseinrichtung bewegt.
Fig. 6 zeigt eine Seitenansicht der Verriegelungseinrichtung in einem verriegelten Zustand.
Fig. 7 und Fig. 8 zeigen Perspektivansichten der Verriegelungseinrichtung während eines Entriegelungsvorgangs.
Fig. 9 und Fig. 10 zeigen Perspektivansichten der Verriegelungseinrichtung während eines Verriegelungsvorgangs, wenn eine Sperre nicht auf einem Vorsprung eines Sperrkranzes aufsitzt.
Fig. 11, Fig. 12 und Fig. 13 zeigen Perspektivansichten der Verriegelungseinrichtung während eines Verriegelungsvorgangs, während die Sperre auf einem Vorsprung des Sperrkranzes aufsitzt.
Fig. 14 zeigt eine Seitenansicht der Verriegelungseinrichtung, wenn die Sperre auf einem Vorsprung des Sperrkranzes aufsitzt.
Fig. 15 zeigt eine Perspektivansicht einer Verriegelungseinrichtung nach einem weiteren Ausführungsbeispiel.
Fig. 16 zeigt eine Perspektivansicht der Verriegelungseinrichtung während eines Entriegelungsvorgangs oder Verriegelungsvorgangs, wenn eine Sperre nicht auf einem Vorsprung eines Sperrkranzes aufsitzt.
Fig. 17 zeigt eine Perspektivansicht der Verriegelungseinrichtung während eines Verriegelungsvorgangs, während die Sperre auf dem Vorsprung des Sperrkranzes aufsitzt.
Fig. 18 zeigt eine Perspektivansicht einer Verriegelungseinrichtung nach noch einem weiteren Ausführungsbeispiel in einem verriegelten Zustand.
Fig. 19 zeigt eine Perspektivansicht der Verriegelungseinrichtung während eines Verriegelungsvorgangs, während eine Sperre auf einem Vorsprung eines Sperrkranzes aufsitzt.
Fig. 20 zeigt eine Perspektivansicht der Verriegelungseinrichtung während eines Verriegelungsvorgangs nach Drehung des Sperrkranzes.
Fig. 21 ist eine Darstellung eines Fahrzeugs mit einer Verriegelungseinrichtung nach einem Ausführungsbeispiel.

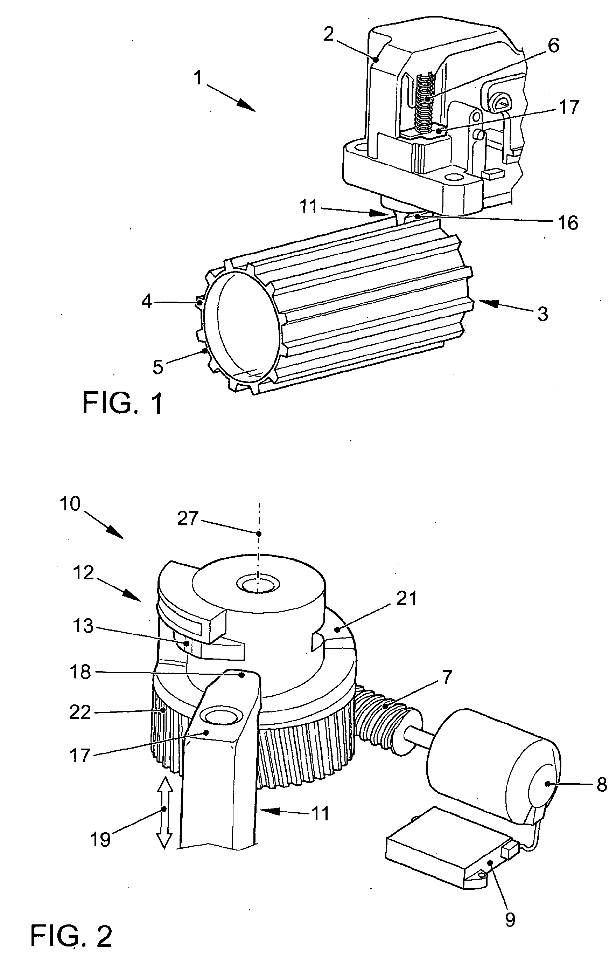

Fig. 1 zeigt einen Aufbau eines Lenkschlosses 1, bei dem eine Verriegelungseinrichtung nach verschiedenen Ausführungsbeispielen eingesetzt werden kann. Das Lenkschloss 1 weist einen Sperrkranz 3 auf. Der Sperrkranz 3 kann an einer Lenkradwelle oder Lenkradspindel angebracht sein. Der Sperrkranz 3 weist mehrere umfangs beabstandete Vorsprünge 4 auf. Die Vorsprünge 4 können Zähne sein, die um eine Höhe zwischen Ausnehmungen 5 abstehen.

Die Verriegelungseinrichtung weist eine Sperre 11 auf. Die Sperre 11 ist als Sperrbolzen ausgebildet. Die Sperre 11 ragt in ein Gehäuse 2. Ein erstes Ende 16 der Sperre 11 ist so dimensioniert, dass es in eine Ausnehmung 5 einfahren kann. Eine Feder 6, die sich an dem Gehäuse 2 abstützt, liegt an einem zweiten Ende 17 der Sperre 11 an und drückt die Sperre 11 in Richtung des Sperrkranzes 3. Wenn das erste Ende 16 in eine Ausnehmung 5 des Sperrkranzes eingefahren ist, blockiert die Sperre 11 eine Drehbewegung des Sperrkranzes 3.

Die Sperre 11 befindet sich in einer Sperrposition, in der sie in blockierendem Eingriff mit dem Sperrkranz 3 steht. Der Sperrkranz 3 kann noch ein gewisses Spiel aufweisen, ist jedoch gegen eine Drehung um einen größeren Winkelbereich gesichert.

Wie unter Bezugnahme auf Figuren 2 bis 20 ausführlicher beschrieben wird, ist eine Verriegelungseinrichtung nach Ausführungsbeispielen so ausgestaltet, dass eine Sicherungseinrichtung die Sperre 11 in der Sperrposition sichert. Dies erfolgt derart, dass die Sicherungseinrichtung verhindert, dass die Sperre 11 gegen die Kraft der Feder 6 so weit angehoben wird, dass nicht mehr in der Ausnehmung 5 positioniert ist. Dabei ist die Sicherungseinrichtung so gelagert, dass durch Betätigung eines Antriebs, durch die eine Bewegung der Sperre 11 aus der Sperrposition in eine Freigabeposition, in der sie außer Eingriff mit dem Sperrkranz 3 steht, auch eine Relativbewegung zwischen der Sicherungseinrichtung und der Sperre 11 hervorgerufen wird. Die Sicherungseinrichtung ist als passives Element ausgebildet, das an einem Überführungselement angeordnet ist, das drehend angetrieben wird, um die Sperre 11 zwischen der Sperrposition und der Freigabeposition zu überführen.

Unter Bezugnahme auf Figuren 2 bis 14 wird eine Verriegelungseinrichtung 10 nach einem Ausführungsbeispiel detailliert beschrieben.

Fig. 2 zeigt eine Perspektivansicht der Verriegelungseinrichtung 10. Die Verriegelungseinrichtung 10 umfasst die Sperre 11, ein Überführungselement 12 zum Überführen der Sperre 11 zwischen der Sperrposition und der Freigabeposition und eine Sicherungseinrichtung 13. Die Sicherungseinrichtung 13 ist als ein Schieber ausgebildet, der an dem Überführungselement 12 gelagert ist. Die Sicherungseinrichtung 13 ist an dem Überführungselement 12 translatorisch verschiebbar gelagert.

Die Verriegelungseinrichtung 10 umfasst weiterhin einen Antrieb 8. Der Antrieb 8 kann ein Elektromotor sein. Der Antrieb 8 ist eingerichtet, um das Überführungselement 12 in Drehung um eine Drehachse 27 zu versetzen. An dem Überführungselement 12 ist eine Hubkurve 21 geformt. Die Hubkurve 21 verläuft spiralartig um die Drehachse 27. Eine Steigung der Hubkurve 21 kann ortsabhängig variieren. Wenn die Sperre 11 unter Wirkung der Feder 6 an der Hubkurve 21 anliegt, wird durch die Drehbewegung des Überführungselements 12 eine Bewegung 19 der Sperre 11 entlang einer Achse hervorgerufen. Um die Sperre 11 in den Sperrzustand zu überführen, d.h. in Fig. 2 nach unten zu bewegen, treibt der Antrieb 8 das Überführungselement 12 in einer ersten Drehrichtung drehend an. Um die Sperre 11 in den Freigabezustand zu überführen, d.h. in Fig. 2 nach oben zu bewegen, treibt der Antrieb 8 das Überführungselement 12 in einer dazu entgegengesetzten zweiten Drehrichtung drehend an.

Ein geeigneter Übertragungsmechanismus kann vorgesehen sein. Beispielsweise kann der Antrieb 8 ausgangsseitig mit einer Schnecke 7 gekoppelt sein. Die Schnecke 7 steht mit einem Schneckenrad 22 in Eingriff, das an dem Überführungselement 12 geformt oder drehfest mit diesem verbunden ist. Eine Steuerung 9 steuert den Antrieb 8. Die Steuerung 9 kann den Antrieb 8 abhängig davon steuern, ob eine Berechtigungsüberprüfung eine Benutzungsberechtigung für das Fahrzeug bestätigt.

Die Sicherungseinrichtung 13 wird von einem elastischen Vorspannmittel, beispielsweise einer Feder 34 oder einem anderen elastischen Element, in Richtung einer ersten Position relativ zu dem Überführungselement 12 gedrückt. Die erste Position relativ zu dem Überführungselement ist in Fig. 2 dargestellt. In der ersten Position ragt die Sicherungseinrichtung 13 aus dem Überführungselement 12 hervor. Wenn sich die Sicherungseinrichtung 13 in der ersten Position befindet, wird zwischen der Sicherungseinrichtung 13 und dem Überführungselement 12 ein Spalt definiert, in den ein Abschnitt 18 der Sperre 11 einfahren kann bzw. aus dem der Abschnitt 18 der Sperre 11 herausfahren kann. Die Sicherungseinrichtung 13, der Abschnitt 18 der Sperre 11 und die Hubkurve 21 des Überführungselements 12 sind so ausgestaltet und bemessen, dass die Sperre 11 die Sicherungseinrichtung 13 bei einer Drehung des Überführungselements 12 nicht bewegt, solange die Sperre 11 an der Hubkurve 21 anliegt und entlang dieser bewegt wird.

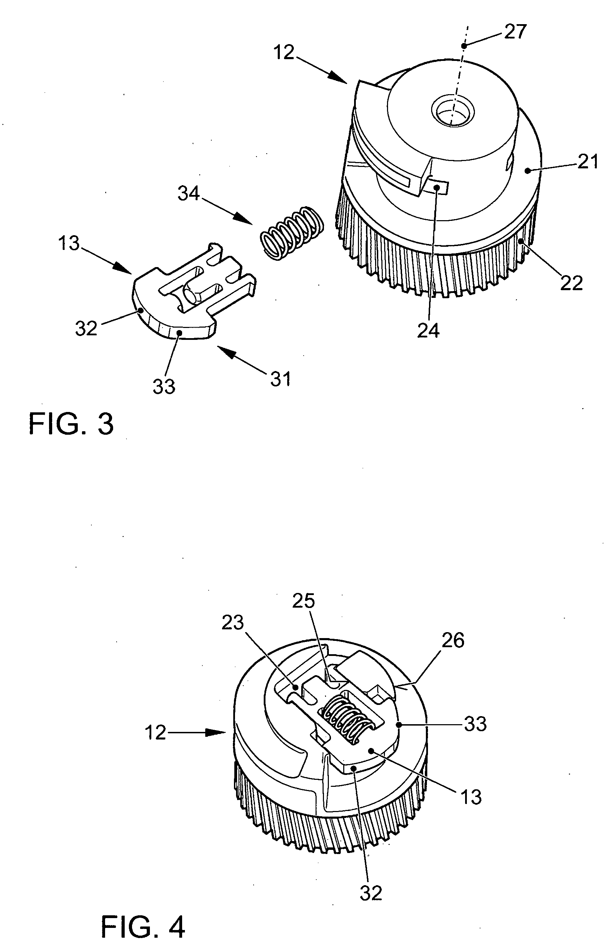

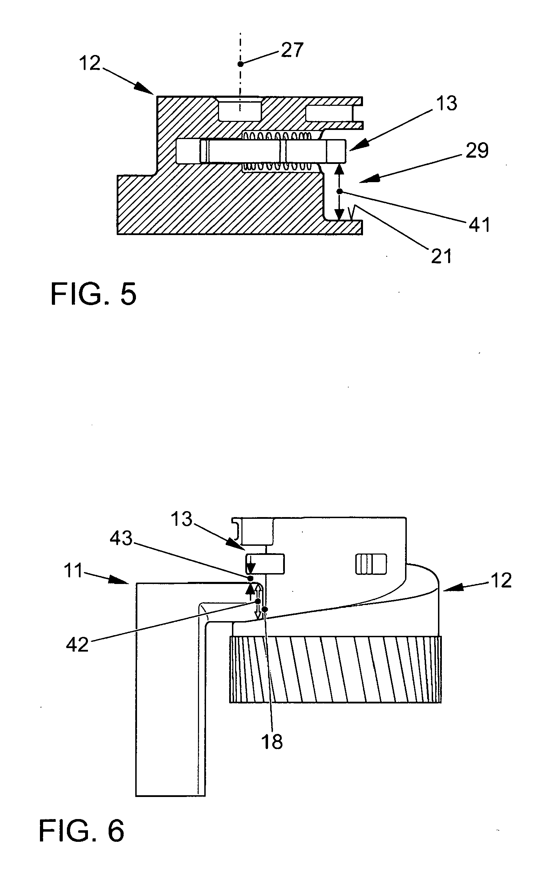

Eine Ausgestaltung des Überführungselements 12 und der Sicherungseinrichtung wird unter Bezugnahme auf Figuren 3 bis 5 näher beschrieben. Fig. 3 zeigt eine teilweise Explosionsansicht der Verriegelungseinrichtung 10. Fig. 4 zeigt eine Schnittansicht der Verriegelungseinrichtung 10 in einer Ebene, in der sich eine Sicherungseinrichtung 13 bewegt. Fig. 5 zeigt eine Schnittansicht der Verriegelungseinrichtung 10 in einer Ebene senkrecht zu der Ebene, in der sich die Sicherungseinrichtung 13 bewegt.

Das Überführungselement 12 weist einen Hohlraum 23 auf, in dem die Sicherungseinrichtung 13 aufgenommen ist. Wenn sich die Sicherungseinrichtung 13 in der ersten Position befindet, die ihrer Ruhelage entspricht, ragt ein Abschnitt der Sicherungseinrichtung 13 aus einer Öffnung 24 des Überführungselements 12 hervor. Wie noch näher beschrieben wird, kann der Abschnitt 18 der Sperre 11 die Sicherungseinrichtung 13 berühren, um sie von der ersten Position relativ zu dem Überführungselement 12 in eine zweite Position relativ zu dem Überführungselement 12 zu bewegen, d.h. relativ zu dem Überführungselement 12 zu verschieben. Dabei wird die Sicherungseinrichtung 13 weiter in den Hohlraum 23 des Überführungselements 12 gedrückt. Seitenwände 25 des Hohlraums 23 dienen als Führungen für die Bewegung des Überführungselements 12 zwischen der ersten Position und der zweiten Position. Hierbei sind die erste Position und die zweite Position der Sicherungseinrichtung 13 jeweils relativ zu dem Überführungselement 12 definiert.

Ein elastisches Vorspannmittel, beispielsweise die Feder 34, stützt sich an dem Überführungselement 12 und an der Sicherungseinrichtung 13 ab. Die Feder 34 drückt die Sicherungseinrichtung 13 in die erste Position, in der sie am weitesten durch die Öffnung 24 aus dem Überführungselement 12 herausragt. Ein Abschnitt der Sicherungseinrichtung 13, der aus der Öffnung 24 hervorragt, wenn sich die Sicherungseinrichtung 13 in der ersten Position relativ zu dem Überführungselement 12 befindet, weist eine Kontaktfläche 31 auf. Die Kontaktfläche 31 kann sich entlang dem Abschnitt 18 der Sperre 11 bewegen, wenn ein Zustand vorliegt, bei dem das erste Ende 16 der Sperre 11 auf einem Vorsprung 4 des Sperrkranzes 3 aufsteht. Die Kontaktfläche 31 ist so geformt, dass der Abschnitt 18 der Sperre 11 die Sicherungseinrichtung 13 gegen eine Kraft der Feder 34 weiter in den Hohlraum 23 drückt, während die Kontaktfläche 31 durch die Drehung des Überführungselements 12 entlang dem Abschnitt 18 der Sperre 11 gleitet. Die Sicherungseinrichtung 13 wird dadurch in die zweite Position überführt. Die Kontaktfläche 31 kann so ausgestaltet sein, dass eine Verschiebung der Sicherungseinrichtung 13 bei einer Bewegung entlang dem Abschnitt 18 der Sperre 11 erleichtert wird. Um eine Hemmung zu vermeiden, kann die Kontaktfläche 31 so geformt sein, dass sie sich ausgehend von einer zylinderförmigen Wand 26 des Überführungselements 12, die einen Abstand von der Drehachse 27 aufweist, konkav nach außen wölbt, wenn die Sperreinrichtung 13 die erste Position relativ zu dem Überführungselement 12 einnimmt. Der Abstand von der Drehachse 27 kann entlang der Kontaktfläche 31 variieren. Die Kontaktfläche 31 kann Abschnitte mit unterschiedlichen Krümmungsradien aufweisen. Die Kontaktfläche 31 kann einen Abschnitt 33 mit einem ersten Krümmungsradius und einen weiteren Abschnitt 32 mit einem davon verschiedenen zweiten Krümmungsradius aufweisen. Der Krümmungsradius des weiteren Abschnitts 32 kann näherungsweise gleich einem Krümmungsradius der Wand 26 des Überführungselements 12 sein. Die erlaubt eine Bewegung der in die zweite Position verschobenen Sicherungseinrichtung 13 an dem Abschnitt 18 der Sperre 11 vorbei, wenn das Überführungselement 12 in der ersten Drehrichtung gedreht wird und die Sperre 11 auf einem der Vorsprünge 4 des Sperrkranzes 3 aufsitzt.

Fig. 5 zeigt eine Schnittansicht der Verriegelungseinrichtung 10 in einer Ebene, in der die Drehachse 27 des Überführungselements 12 liegt. Die Sicherungseinrichtung 13 befindet sich in der ersten Position, in der sie über die Seitenwand 26 des Überführungselements 12 herausragt. Ein Freiraum oder Spalt 29 ist zwischen einer Wand der Sicherungseinrichtung 13 und der Hubkurve 21 des Überführungselements 12 definiert. Der Spalt weist eine Höhe 41 auf, die größer als eine Höhe des Abschnitts 18 der Sperre 11 ist. Dies erlaubt, dass der Abschnitt 18 der Sperre 11 in den Spalt 29 einfahren kann, wenn die Sperre 11 an der Hubkurve 21 anliegt, ohne dass die Sperre 11 die Sicherungseinrichtung 13 berührt. Falls die Hubkurve 21 einen flachen Bereich ohne Steigung über einen Winkelbereich aufweist, der in Fig. 5 und Fig. 6 unterhalb des aus dem Überführungselement 12 herausstehenden Teils der Sicherungseinrichtung 13 liegt (d.h. falls der Bereich der Hubkurve 21, auf den die Sicherungseinrichtung 13 bei einer Projektion parallel zur Drehachse abgebildet wird, keine Steigung aufweist), ist die Höhe 41 konstant. Die Höhe 41 kann auch variieren, beispielsweise falls die Hubkurve 21 über ihre gesamte Länge eine endliche Steigung aufweist. In diesem Fall ist die Verriegelungseinrichtung 10 so ausgestaltet, dass ein Minimum der Höhe 41, die den Abstand zwischen den einander gegenüberliegenden Seiten der Sicherungseinrichtung 13 und der Hubkurve, gemessen entlang einer Achse parallel zur Drehachse 27, angibt, größer als eine Höhe des Abschnitts 18, gemessen entlang der Achse parallel zur Drehachse 27, ist.

Die Steigung der Hubkurve 21, die Anordnung der Sicherungseinrichtung 13 und die Höhe des Abschnitts 18 der Sperre, der in den Spalt 29 zwischen der Hubkurve 21 und der Sicherungseinrichtung 13 einfährt, sind somit so gewählt, dass sich der Abschnitt 18 der Sperre 11 in dem Spalt 29 bewegen kann, wenn die Sperre 11 an der Hubkurve 21 anliegt, ohne dass die Sperre 11 die Sicherungseinrichtung 13 berührt. Die Höhe 41 ist weiterhin so gewählt, dass ein Spiel der Sperre 11 für eine Bewegung parallel zur Drehachse 27 so klein ist, dass die Sperre 11 nicht aus der Ausnehmung 5 des Sperrkranzes 3 ausgerückt werden kann.

Fig. 6 zeigt eine Seitenansicht der Verriegelungseinrichtung 10 in einem Zustand, in dem sich die Sperre 11 in der Sperrposition befindet und in dem sich die Sicherungseinrichtung 13 in der ersten Position befindet. Der Sperrkranz 3 ist blockiert. Die Sicherungseinrichtung 13 verhindert, dass die Sperre 11 aus der Ausnehmung 5 des Sperrkranzes 3 ausgerückt werden kann, indem sie die Bewegung der Sperre 11 in Axialrichtung beschränkt.

Die der Sicherungseinrichtung 13 zugewandte Endfläche der Sperre 11 weist einen Abstand 43 von der Sicherungseinrichtung 13 auf. Der Abschnitt 18 der Sperre 11, der in dem Spalt 29 angeordnet ist, weist eine Höhe 42 gemessen parallel zur Drehachse 27 auf. Der Abstand 43 ist so gewählt, dass er kleiner als die Vorsprungshöhe eines Vorsprungs 4 des Sperrkranzes 3 ist, d.h. kleiner als die Höhe, um die der Vorsprung 4 gegenüber der Ausnehmung 5 an dem Sperrkranz 3 hervorragt.

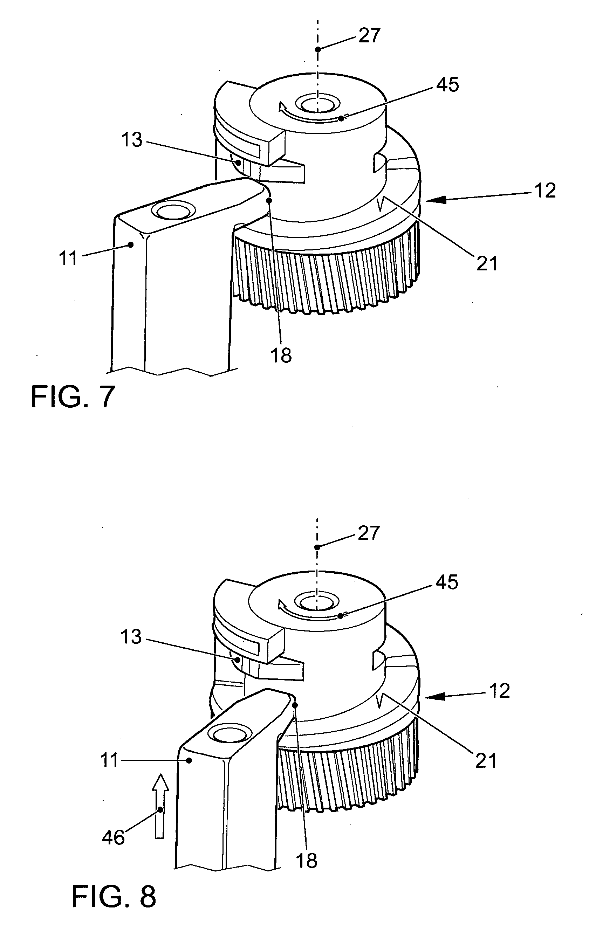

Fig. 7 und Fig. 8 zeigen die Verriegelungseinrichtung 10 während des Entriegelungsvorgangs. Zur besseren Deutlichkeit ist die Perspektive in Fig. 8 gegenüber der Perspektive in Fig. 7 geändert. In der Verriegelungseinrichtung 10 sind die Achse, entlang der sich die Sperre 11 bewegt, und die Drehachse 27 ortsfest.

Die Verriegelungseinrichtung 10 befindet sich zu Beginn des Entriegelungsvorgangs in einem verriegelten Zustand, in dem sich die Sperre 11 in der Sperrposition befindet und in dem sich die Sicherungseinrichtung 13 in der ersten Position befindet. Zum Entriegeln der Verriegelungseinrichtung 10 wird der Antrieb 8 betätigt. Das Überführungselement 12 wird in einer zweiten Drehrichtung 45 bewegt. Das Überführungselement 12 dreht sich relativ zu der Sperre 11. Da die Sicherungseinrichtung 13 an dem Überführungselement 12 gelagert ist, wird durch die Drehung des Überführungselements 12 auch eine relative Bewegung zwischen der Sicherungseinrichtung 13 und der Sperre 11 hervorgerufen. Dies geschieht automatisch durch die Drehung des Überführungselements 12, die auch die Hubbewegung der Sperre 11 hervorruft. Die Sicherungseinrichtung 13 wird durch die Drehung des Überführungselements 12 in der zweiten Drehrichtung 45 so relativ zu der Sperre 11 bewegt, dass die Sicherungseinrichtung 13 die Sperre 11 entlang der Bewegungsrichtung der Sperre 11, d.h. entlang einer Achse parallel zur Drehachse 27, nicht mehr überdeckt. Die Sperre 11 wird durch die Hubkurve 21 gegen die Kraft der Feder 6 angehoben. Eine Hubbewegung 46 der Sperre 11 überführt die Sperre 11 in die Freigabeposition, in der sie sich außer Eingriff mit dem Sperrkranz 3 befindet.

Wie aus der Beschreibung des Aufbaus und der Funktionsweise der Verriegelungseinrichtung 10 deutlich wird, ist die Sicherungseinrichtung 13 als passives Bauteil ausgestaltet, das nicht aktiv relativ zu dem Überführungselement 12 angetrieben wird. Die Sicherung der Sperre 11 gegen Verschiebung aus der Sperrposition in die Freigabeposition wird automatisch durch die Drehung des Überführungselements 12 in der zweiten Drehrichtung 45 beendet, bei der die Sicherungseinrichtung 13 zugleich in einer Richtung senkrecht zur Drehachse 27 relativ zu der Sperre 11 bewegt wird. Es ist keine separate Phase erforderlich, in der die Sicherungseinrichtung 13 aktiv relativ zu dem Überführungselement 12 bewegt werden muss. Die Sicherungseinrichtung 13 bleibt bei der Drehung des Überführungselements 12 in der zweiten Drehrichtung 45 in der ersten Position relativ zu dem Überführungselement 12.

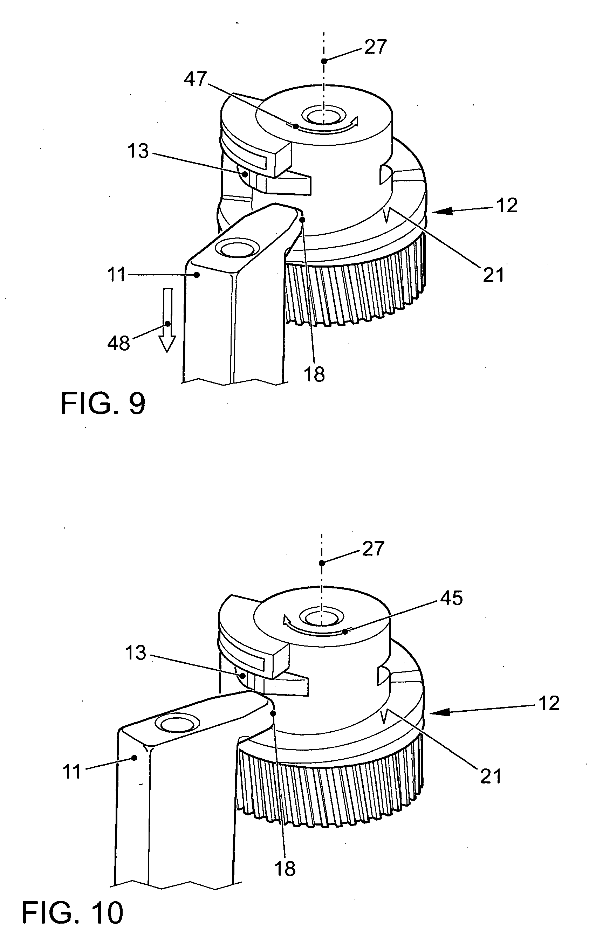

Fig. 9 und Fig. 10 zeigen die Verriegelungseinrichtung 10 während des Verriegelungsvorgangs, wenn die Sperre 11 nicht auf einem Vorsprung 4 des Sperrkranzes 3 aufsitzt. Zur besseren Deutlichkeit ist die Perspektive in Fig. 10 gegenüber der Perspektive in Fig. 9 geändert.

Die Verriegelungseinrichtung 10 befindet sich zu Beginn des Verriegelungsvorgangs in einem entriegelten Zustand, in dem sich die Sperre 11 in der Freigabeposition befindet. Die Sicherungseinrichtung 13 ist in der ersten Position relativ zu dem Überführungselement. Zum Verriegeln der Verriegelungseinrichtung 10 wird der Antrieb 8 betätigt. Das Überführungselement 12 wird in einer ersten Drehrichtung 47 bewegt. Das Überführungselement 12 dreht sich relativ zu der Sperre 11. Da die Sicherungseinrichtung 13 an dem Überführungselement 12 gelagert ist, wird durch die Drehung des Überführungselements 12 auch eine relative Bewegung zwischen der Sicherungseinrichtung 13 und der Sperre 11 hervorgerufen. Dies geschieht automatisch durch die Drehung des Überführungselements 12, die auch die Absenkbewegung 48 der Sperre 11 hervorruft. Die Sicherungseinrichtung 13 wird durch die Drehung des Überführungselements 12 in der ersten Drehrichtung 47 so relativ zu der Sperre 11 bewegt, dass die Sicherungseinrichtung 13 den Abschnitt 18 der Sperre 11 überdeckt. Das heißt, die Sicherungseinrichtung 13 wird durch die Drehung des Überführungselements 12 so relativ zu der Sperre 11 positioniert, dass sie die Sperre 11 entlang der Bewegungsrichtung der Sperre 11, d.h. entlang einer Achse parallel zur Drehachse 27, überdeckt. Die Feder 6 stellt sicher, dass die Sperre 11 in Anlage mit der Hubkurve 21 bleibt, falls die Sperre 11 nicht auf einem Vorsprung 4 des Sperrkranzes aufsteht. Die Absenkbewegung 48 der Sperre 11 bringt diese in die Sperrposition, in der sie sich in Eingriff mit dem Sperrkranz 3 befindet. Die Sicherungseinrichtung 13 überdeckt den Abschnitt 18 der Sperre 11 und sichert diese so in der Sperrposition.

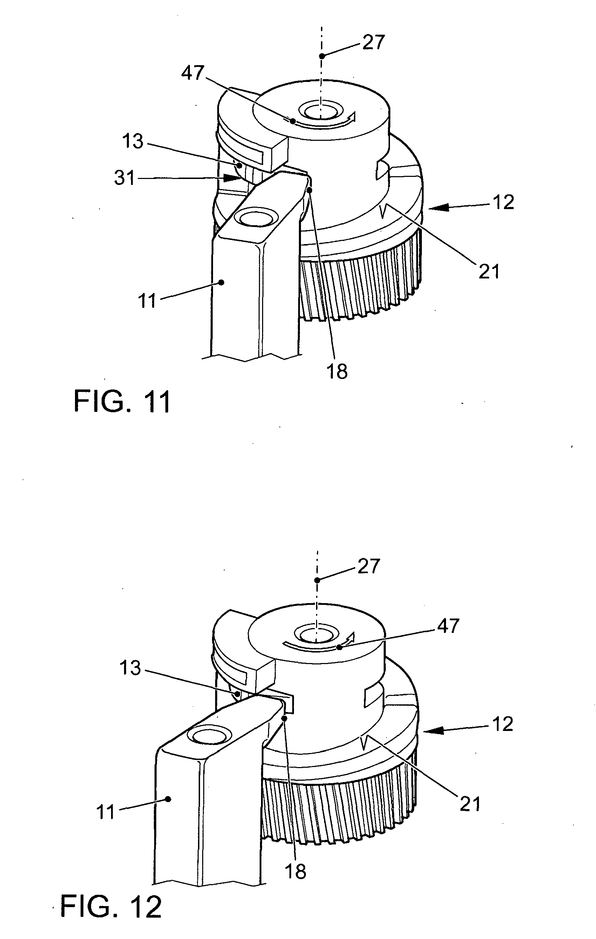

Figuren 11 bis 14 zeigen die Verriegelungseinrichtung 10 während des Verriegelungsvorgangs, wenn die Sperre 11 auf einem Vorsprung 4 des Sperrkranzes 3 aufsitzt. Zur besseren Deutlichkeit sind die Perspektiven in Figuren 11 bis 13 geringfügig geändert.

Die Verriegelungseinrichtung 10 befindet sich zu Beginn des Verriegelungsvorgangs in einem entriegelten Zustand, in dem sich die Sperre 11 in der Freigabeposition befindet. Die Sicherungseinrichtung 13 ist in der ersten Position relativ zu dem Überführungselement. Zum Verriegeln der Verriegelungseinrichtung 10 wird der Antrieb 8 betätigt. Das Überführungselement 12 wird in einer ersten Drehrichtung 47 bewegt. Das Überführungselement 12 dreht sich relativ zu der Sperre 11. Da die Sicherungseinrichtung 13 an dem Überführungselement 12 gelagert ist, wird durch die Drehung des Überführungselements 12 auch eine relative Bewegung zwischen der Sicherungseinrichtung 13 und der Sperre 11 hervorgerufen. Dies geschieht automatisch durch die Drehung des Überführungselements 12, die auch die Absenkbewegung 48 der Sperre 11 hervorruft.

Wenn die Sperre 11 auf dem Vorsprung 4 des Sperrkranzes 3 aufsteht, bleibt die Sperre 11 bei Drehung des Überführungselements 12 in der ersten Drehrichtung 47 nicht in Anlage mit der Hubkurve 21. Der Abschnitt 18 der Sperre 11 ist so positioniert, dass er in Kontakt mit der Sicherungseinrichtung 13 kommt. Da die Sicherungseinrichtung 13 beweglich an dem Überführungselement 21 gelagert ist, wird die Drehung des Überführungselements 12 dadurch nicht blockiert. Die fortgesetzte Drehung des Überführungselements 12 in der ersten Drehrichtung 47 führt dazu, dass die Kontaktfläche 31 der Sicherungseinrichtung 13 an dem Abschnitt 18 der Sperre 11 entlang gleitet. Dabei wird die Sicherungseinrichtung 13 in den Hohlraum 23 des Überführungselements 12 gedrückt und so in die zweite Position relativ zu dem Überführungselement 12 bewegt.

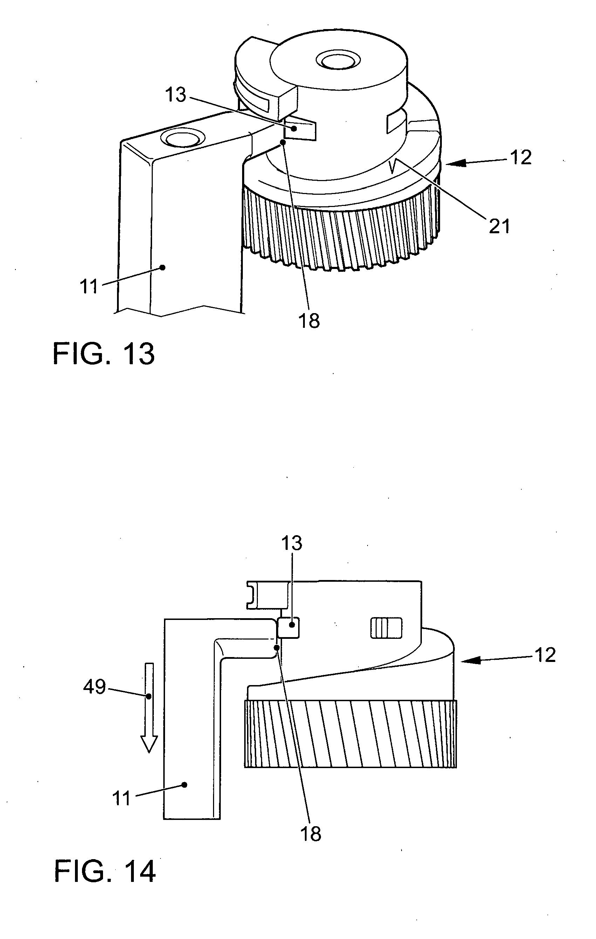

Fig. 13 und Fig. 14 zeigen die Verriegelungseinrichtung, wenn der Antrieb deaktiviert ist. Die Sicherungseinrichtung 13 ist durch den Kontakt mit der Sperre 11 in die zweite Position relativ zu dem Überführungselement 13 gebracht worden. Die Sperre 11 steht immer noch auf dem Vorsprung 4 des Sperrkranzes auf.

Durch eine Drehung des Sperrkranzes 3, die bei einem Lenkschloss durch eine Drehung des Lenkrads hervorgerufen wird, wird der Sperrkranz 3 relativ zu der Sperre 11 so bewegt, dass die Sperre 11 in eine der Ausnehmungen 5 des Sperrkranzes 3 einrasten kann. Dies führt dazu, dass die Sperre 11 eine Einrastbewegung 49 ausführt. Dadurch gelangt die Sperre 11 in die Sperrposition. Der Abschnitt 18 der Sperre 11 drückt nicht mehr gegen die Kontaktfläche 31 der Sicherungseinrichtung 13. Die Sicherungseinrichtung 13 wird von der Feder 34 in die erste Position gedrückt, in der die Sicherungseinrichtung 13 die Sperre 11 gegen Bewegung in Axialrichtung sichert. Der Endzustand entspricht dem in Fig. 7 dargestellten Zustand.

Wie aus der Beschreibung des Aufbaus und der Funktionsweise der Verriegelungseinrichtung 10 deutlich wird, führt die Drehbewegung des Überführungselements bei der Verriegelung zu einer Relativbewegung zwischen Sicherungseinrichtung 13 und Sperre 11, die auch eine Komponente senkrecht zur Drehachse aufweist. Ein separates Antreiben der Sicherungseinrichtung 13 relativ zu dem Überführungselement 12 ist nicht erforderlich. Unterschiedliche Bewegungsabläufe resultieren abhängig davon, ob die Sperre 11 auf einem Vorsprung 4 des Sperrkranzes 3 aufsteht oder nicht. Die Sicherungseinrichtung 13 fährt ohne Berührung mit der Sperre 11 über einen Abschnitt 18 der Sperre 11, um diesen zu überdecken, wenn die Sperre 11 nicht auf dem Vorsprung 4 des Sperrkranzes 3 aufsteht. Die Sicherungseinrichtung 13 fährt entlang dem Abschnitt 18 der Sperre 11 und wird dadurch in die zweite Position relativ zu dem Überführungselement 12 bewegt, wenn die Sperre 11 auf dem Vorsprung 4 des Sperrkranzes 3 aufsteht.

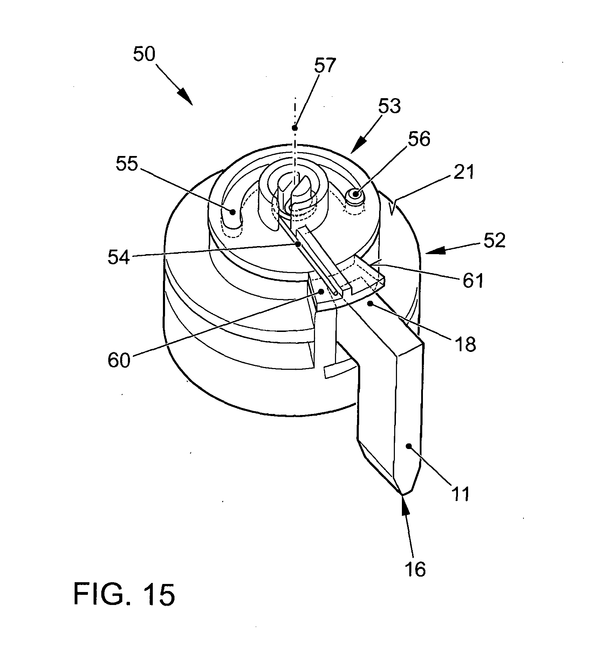

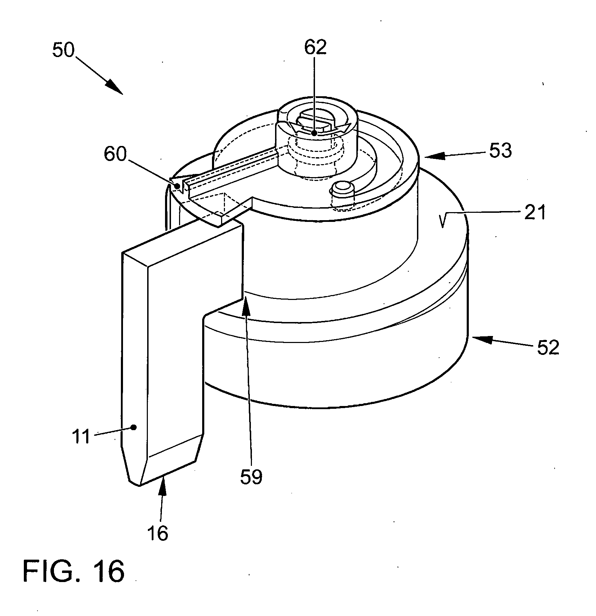

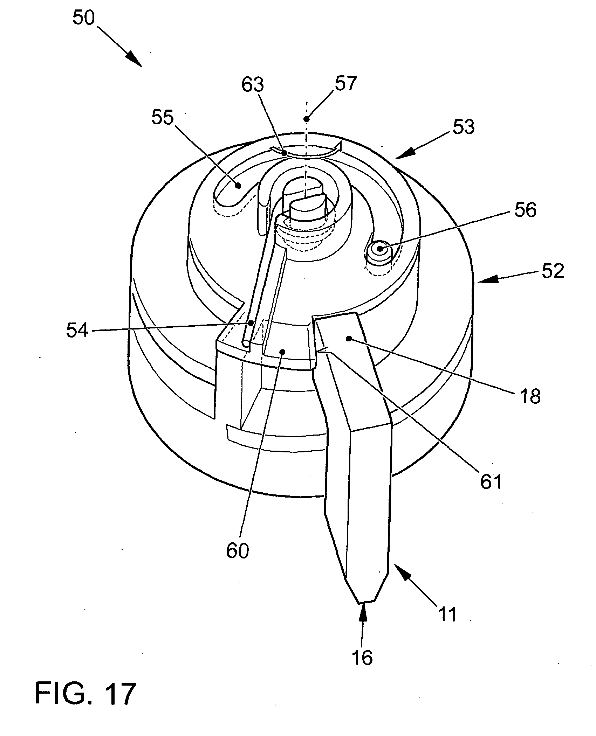

Unter Bezugnahme auf Figuren 15 bis 17 wird eine Verriegelungseinrichtung 50 nach einem weiteren Ausführungsbeispiel detailliert beschrieben. Fig. 15 zeigt eine Perspektivansicht der Verriegelungseinrichtung 50. Fig. 16 zeigt eine Perspektivansicht der Verriegelungseinrichtung 50 während eines Entriegelungsvorgangs oder Verriegelungsvorgangs, wenn eine Sperre nicht auf einem Vorsprung eines Sperrkranzes aufsitzt. Fig. 17 zeigt eine Perspektivansicht der Verriegelungseinrichtung 50 während eines Verriegelungsvorgangs, während die Sperre auf dem Vorsprung des Sperrkranzes aufsteht. Die Verriegelungseinrichtung 50 kann weitere Komponenten aufweisen, beispielsweise ein Gegenelement in Form eines Sperrkranzes 3 und/oder einen Antrieb 8 mit geeignetem Getriebe zwischen Antrieb 8 und Überführungselement. Elemente und Einrichtungen, die in Ausgestaltung und Funktion Elementen und Einrichtungen entsprechen, die unter Bezugnahme auf die Figuren 1 bis 14 beschrieben wurden, sind mit denselben Bezugszeichen bezeichnet.

Die Verriegelungseinrichtung 50 umfasst die Sperre 11, ein Überführungselement 52 zum Überführen der Sperre 11 zwischen der Sperrposition und der Freigabeposition und eine Sicherungseinrichtung 53. Die Sicherungseinrichtung 53 ist als eine Drehscheibe ausgebildet, die an dem Überführungselement 52 gelagert ist. Die Sicherungseinrichtung 53 ist an dem Überführungselement 52 verschwenkbar gelagert. Das Überführungselement 52 weist eine Hubkurve 21 auf. Ein Schneckenrad kann an dem Überführungselement 52 geformt oder drehfest mit diesem verbunden sein.

Die Sicherungseinrichtung 53 weist einen Vorsprung 60 auf. In dem in Fig. 15 dargestellten Zustand, in dem sich die Sperre 11 in der Sperrposition befindet und in dem sich die Sicherungseinrichtung 53 in einer ersten Position relativ zu dem Überführungselement 52 befindet, überdeckt die Sicherungseinrichtung 53 mit dem Vorsprung 60 einen Abschnitt 18 der Sperre 11.

Die Sicherungseinrichtung 53 ist verschwenkbar an dem Überführungselement 52 gelagert. Eine sich in azimuthaler Richtung um eine Drehachse 57 erstreckende Ausnehmung 55 und ein in diese eingreifender korrespondierender Zapfen 56 dienen als Führung für die Schwenkbewegung der Sicherungseinrichtung 53. Ein elastisches Vorspannmittel, beispielsweise eine Schenkelfeder 54, drückt die Sicherungseinrichtung 53 in Richtung der ersten Position relativ zu dem Überführungselement 52. Wenn die Sperre 11 an der Hubkurve 21 anliegt, dreht sich bei einer Drehung 62 des Überführungselements 52 in einer ersten Drehrichtung und einer entgegengesetzten zweiten Drehrichtung die Sicherungseinrichtung 53 zusammen mit dem Überführungselement 52. Die Sicherungseinrichtung 53 bleibt in der ersten Position relativ zu dem Überführungselement 52.

Zwischen dem Vorsprung 60 der Sicherungseinrichtung 53 und der Hubkurve 21 ist ein Spalt 59 definiert. Wie unter Bezugnahme auf die Verriegelungseinrichtung 10 erläutert, sind auch bei der Verriegelungseinrichtung 50 eine Steigung der Hubkurve 21, die Anordnung der Sicherungseinrichtung 53 und die Höhe des Abschnitts 18 der Sperre, der in den Spalt 59 zwischen der Hubkurve 21 und Sicherungseinrichtung 53 einfährt, so gewählt, dass sich der Abschnitt 18 der Sperre 11 in dem Spalt 59 bewegen kann, wenn die Sperre 11 an der Hubkurve 21 anliegt, ohne dass die Sperre 11 die Sicherungseinrichtung 53 berührt. Die Höhe des Spalts 59, d.h. der Abstand zwischen dem Vorsprung 60 und der Hubkurve 21 gemessen parallel zur Drehachse 57, ist weiterhin so gewählt, dass ein Spiel der Sperre 11 für eine Bewegung parallel zur Drehachse 57 so klein ist, dass die Sperre 11 nicht aus der Ausnehmung 5 des Sperrkranzes 3 ausgerückt werden kann.

Fig. 16 veranschaulicht die Verriegelungseinrichtung 50 bei einer Drehung 62 des Überführungselements 52. Der Abschnitt 18 der Sperre 11 bewegt sich in dem Spalt 59, wenn die Sperre 11 an der Hubkurve 21 anliegt. Bei einer Drehung des Überführungselements 52 in einer ersten Drehrichtung zur Verriegelung wird die Sperre 11 in Axialrichtung auf den Sperrkranze 3 zu bewegt und so in Eingriff mit dem Sperrkranz 3 gebracht. Gleichzeitig wird die Sicherungseinrichtung 53 relativ zu der Sperre 11 so bewegt, dass sie den Abschnitt 18 der Sperre 11 überdeckt. Dadurch wird die Sperre 11 in der Sperrposition gesichert. Die Sicherungseinrichtung 53 bleibt dabei in der ersten Position relativ zu dem Überführungselement 52. Bei einer Drehung des Überführungselements 52 in einer zweiten Drehrichtung zur Entriegelung wird die Sicherungseinrichtung 53 relativ zu der Sperre 11 so bewegt, dass sie den Abschnitt 18 der Sperre 11 nicht mehr überdeckt. Gleichzeitig wird die Sperre 11 in Axialrichtung von dem Sperrkranze 3 weg bewegt und so außer Eingriff mit dem Sperrkranz 3 gebracht. Dadurch wird die Sperre 11 in die Freigabeposition überführt. Die Sicherungseinrichtung 53 bleibt dabei in der ersten Position relativ zu dem Überführungselement 52.

Fig. 17 veranschaulicht den Verriegelungsvorgang, wenn die Sperre 11 auf einem Vorsprung 4 des Sperrkranzes aufsteht. Das Überführungselement 52 wird in einer ersten Drehrichtung 63 gedreht. In diesem Fall muss die Sperre 11 nicht an der Hubkurve 21 anliegen. Der Vorsprung 60 der Sicherungseinrichtung 53 fährt auf Höhe des Abschnitts 18 der Sperre 11 gegen die Sperre 11. Dabei kommt eine Kante 61 des Vorsprungs 60, die senkrecht zur Drehachse 57 steht, in Kontakt mit der Sperre 11. Bei fortgesetzter Drehung des Überführungselements 52 wird die Sicherungseinrichtung 53 relativ zu dem Überführungselement 52 verschwenkt und so in die zweite Position relativ zu dem Überführungselement 52 gebracht. Die Relativbewegung zwischen Überführungselement 52 und Sicherungseinrichtung 53 erfolgt gegen die Kraft der Schenkelfeder 54.

Durch eine Drehung des Sperrkranzes 3, der bei einem Lenkschloss durch eine Drehung des Lenkrads hervorgerufen wird, wird der Sperrkranz 3 relativ zu der Sperre 11 so bewegt, dass die Sperre 11 in eine der Ausnehmungen 5 des Sperrkranzes 3 einrasten kann. Dies führt dazu, dass die Sperre 11 die Einrastbewegung ausführt. Dadurch gelangt die Sperre 11 in die Sperrposition. Der Abschnitt 18 der Sperre 11 drückt dann nicht mehr gegen den Abschnitt 60 der Sicherungseinrichtung 53. Die Sicherungseinrichtung 53 wird unter Wirkung der Schenkelfeder 54 in ihre erste Position gedrückt, in der sie die Sperre 11 gegen eine Bewegung in einer Axialrichtung sichert. Der Endzustand entspricht dem in Fig. 15 dargestellten Zustand.

Wie aus der Beschreibung des Aufbaus und der Funktionsweise der Verriegelungseinrichtung 50 deutlich wird, ist die Sicherungseinrichtung 53 als passives Bauteil ausgestaltet, das nicht aktiv relativ zu dem Überführungselement 52 angetrieben wird. Die Sicherung der Sperre 11 gegen eine Verschiebung aus der Sperrposition in die Freigabeposition wird automatisch durch die Drehung des Überführungselements 52 in der zweiten Drehrichtung freigegeben. Dies geschieht, indem die Sicherungseinrichtung 52 dabei relativ zu der Sperre 11 in einer Richtung senkrecht zur Drehachse 57 bewegt wird. Die Drehbewegung des Überführungselements 52 bei der Verriegelung führt ebenfalls zu einer Relativbewegung zwischen Sicherungseinrichtung 52 und Sperre 11. Ein separates Antreiben der Sicherungseinrichtung 53 relativ zu dem Überführungselement 52 ist nicht erforderlich. Unterschiedliche Bewegungsabläufe resultieren abhängig davon, ob die Sperre 11 auf einem Vorsprung 4 des Sperrkranzes 3 aufsteht. Die Sicherungseinrichtung 53 fährt ohne Berührung mit der Sperre 11 über einen Abschnitt 18 der Sperre 11, um diesen zu überdecken, wenn die Sperre 11 nicht auf dem Vorsprung 4 des Sperrkranzes 3 aufsteht. Die Sicherungseinrichtung 53 fährt zunächst gegen den Abschnitt 18 der Sperre 11 und wird dadurch in die zweite Position relativ zu dem Überführungselement 12 bewegt, wenn die Sperre 11 auf dem Vorsprung 4 des Sperrkranzes 3 aufsteht.

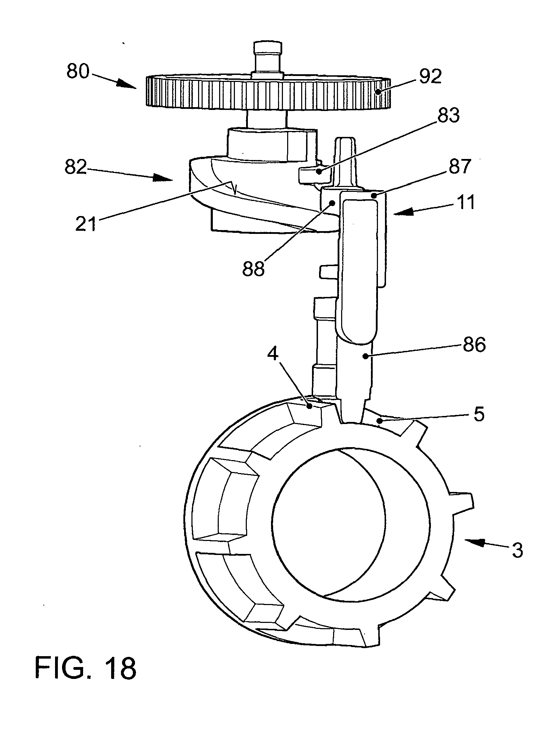

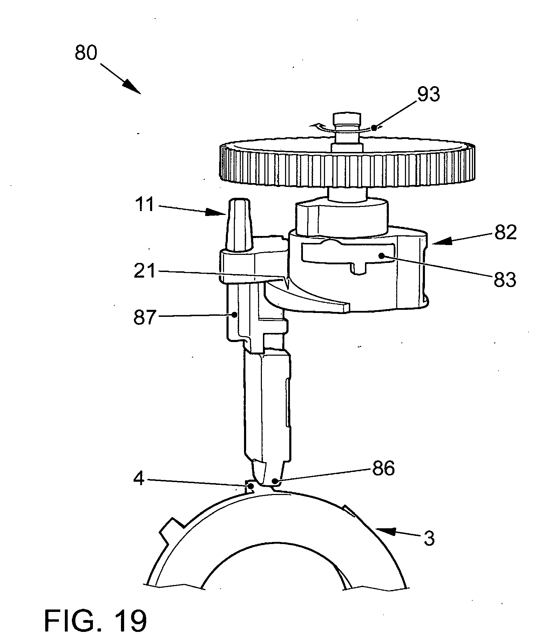

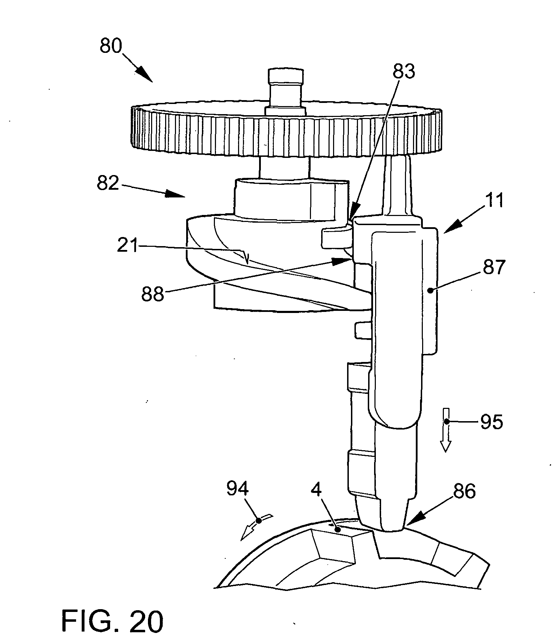

Unter Bezugnahme auf Figuren 18 bis 20 wird eine Verriegelungseinrichtung 80 nach einem weiteren Ausführungsbeispiel detailliert beschrieben. Fig. 18 zeigt eine Perspektivansicht der Verriegelungseinrichtung 80. Figuren 19 und 20 zeigen Perspektivansichten der Verriegelungseinrichtung 80 während eines Verriegelungsvorgangs, wenn eine Sperre zunächst auf einem Vorsprung 4 eines Sperrkranzes 3 aufsteht. Elemente und Einrichtungen, die in Ausgestaltung und Funktion Elementen und Einrichtungen entsprechen, die unter Bezugnahme auf Figuren 1 bis 17 beschrieben wurden, sind mit denselben Bezugszeichen bezeichnet.

Die Verriegelungseinrichtung 80 umfasst die Sperre 11, ein Überführungselement 82 zum Überführen der Sperre 11 zwischen der Sperrposition und der Freigabeposition und eine Sicherungseinrichtung 83. Die Sicherungseinrichtung 83 ist wie bei der Verriegelungseinrichtung 10 als Schieber ausgebildet, der translatorisch verschiebbar an dem Überführungselement 82 gelagert ist. Ein Abschnitt der Sicherungseinrichtung 83 ist in einem Hohlraum des Überführungselements 82 aufgenommen. Das Überführungselement 82 weist eine Hubkurve 21 auf. Ein Schneckenrad 92 ist drehfest mit dem Überführungselement 82 verbunden.

Die Sperre 11 ist zweiteilig ausgebildet und weist ein erstes Sperrenteil 86 und ein zweites Sperrenteil 87 auf. Die Sicherungseinrichtung 83 ragt in der ersten Position aus dem Überführungselement 82 hervor. Fig. 18 zeigt einen Zustand, in dem sich die Sperre 11 in der Sperrposition befindet und in dem sich die Sicherungseinrichtung 83 in einer ersten Position relativ zu dem Überführungselement 82 befindet. In diesem Zustand überdeckt die Sicherungseinrichtung 83 einen Abschnitt 88 der Sperre 11 und sichert die Sperre so in der Sperrposition. Wie unter Bezugnahme auf die Verriegelungseinrichtung 10 und die Verriegelungseinrichtung 50 erläutert, sind auch bei der Verriegelungseinrichtung 80 eine Steigung der Hubkurve 21, die Anordnung der Sicherungseinrichtung 83 und die Höhe des Abschnitts 88 der Sperre 11, der in einen Spalt zwischen der Hubkurve 21 und Sicherungseinrichtung 83 einfährt, so gewählt, dass sich der Abschnitt 88 der Sperre 11 in dem Spalt bewegen kann, wenn die Sperre 11 an der Hubkurve 21 anliegt. Die Höhe des Spalts zwischen der Sicherungseinrichtung 83 und der Hubkurve 21, d.h. der Abstand zwischen der Sicherungseinrichtung 83 und der Hubkurve 21 gemessen parallel zur Drehachse des Überführungselements 82, ist weiterhin so gewählt, dass ein Spiel der Sperre 11 für eine Bewegung parallel zur Drehachse so klein ist, dass die Sperre 11 nicht aus der Ausnehmung 5 des Sperrkranzes 3 ausgerückt werden kann.

Wie in Figuren 19 und 20 dargestellt, liegt die Sperre 11 nicht immer an der Hubkurve 21 an, wenn sie auf einem Vorsprung 4 des Sperrkranzes 3 aufsteht. Bei Drehung des Überführungselements 82 in der ersten Drehrichtung 93 wird eine Kontaktfläche der Sicherungseinrichtung 83 auf Höhe des Abschnitts 88 der Sperre 11 gedreht. Die Kontaktfläche der Sicherungseinrichtung 83 kommt mit dem Abschnitt 88 der Sperre 11 in Berührung. Die Sicherungseinrichtung 83 wird weiter in das Überführungselement 82 gedrückt und so von der ersten Position, in die es durch eine Feder gedrückt wird, in eine zweite Position relativ zu dem Überführungselement 82 bewegt.

Wie in Fig. 20 dargestellt wird durch eine Drehung 94 des Sperrkranzes 3, der bei einem Lenkschloss durch eine Drehung des Lenkrads hervorgerufen wird, der Sperrkranz 3 relativ zu der Sperre 11 so bewegt, dass die Sperre 11 in eine der Ausnehmungen 5 des Sperrkranzes 3 einrasten kann. Dies führt dazu, dass die Sperre 11 eine Einrastbewegung 95 ausführt. Dadurch gelangt die Sperre 11 in die Sperrposition. Der Abschnitt 88 der Sperre 11 drückt dann nicht mehr gegen die Sicherungseinrichtung 83. Die Sicherungseinrichtung 83 wird unter Wirkung der Feder in die erste Position relativ zu dem Überführungselement 82 gedrückt, in der die Sicherungseinrichtung 83 die Sperre 11 gegen eine Bewegung in Axialrichtung sichert. Der Endzustand entspricht dem in Fig. 18 dargestellten Zustand.

Die Verriegelungseinrichtungen nach Ausführungsbeispielen können bei Schlössern eingesetzt werden. Die Verriegelungseinrichtungen können insbesondere bei Lenkschlössern eingesetzt werden.

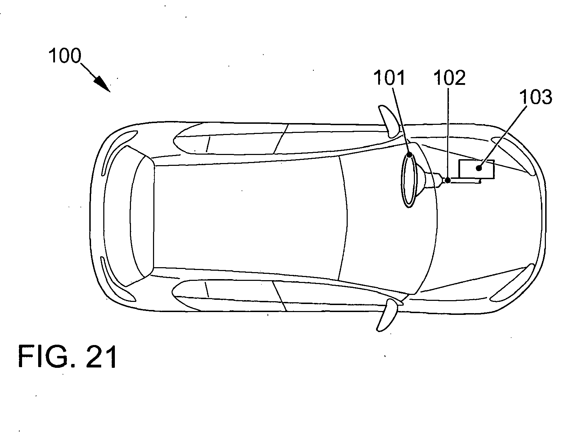

Fig. 21 zeigt ein Fahrzeug 100, das eine Verriegelungseinrichtung 103 nach einem Ausführungsbeispiel umfasst. Das Fahrzeug 100 weist ein Lenkrad 101 auf. Die Verriegelungseinrichtung 103 nach einem Ausführungsbeispiel kann selektiv mit einer Lenkradwelle 102 in Eingriff gebracht werden und so als Lenkschloss.dienen. Die Verriegelungseinrichtung 103 kann insbesondere eine der unter Bezugnahme auf Figuren 1 bis 20 detailliert beschriebenen Ausgestaltungen aufweisen.

Verriegelungseinrichtungen nach Ausführungsbeispielen weisen eine kompakte und einfache Bauweise auf. Die Sicherungseinrichtung ist in das Überführungselement, das ein Schneckenrad mit angeformter Hubkurve sein kann, integriert. Bei einer Ver- und Entriegelung dreht sich die Sicherungseinrichtung passiv mit dem Überführungselement mit. Die Sicherungseinrichtung wird nur dann relativ zu dem Überführungselement in die zweite Position bewegt, wenn die Sperre auf einem Vorsprung des Sperrkranzes aufsteht. Bei Einrasten der Sperre in den Sperrkranz bewegt sich die Sicherungseinrichtung automatisch in die erste Position, in der sie die Sperre gegen eine Bewegung von der Sperrposition in die Freigabeposition sichert.

Während Verriegelungseinrichtungen und Verfahren nach Ausführungsbeispielen beschrieben wurden, können Abwandlungen bei weiteren Ausführungsbeispielen realisiert werden. Beispielsweise können die Verriegelungseinrichtungen nicht nur zur Lenkungsverriegelung, sondern allgemein bei Schlössern eingesetzt werden.

## Patentansprüche

1. Verrieglungseinrichtung für ein Fahrzeug (100), umfassend:
- eine zwischen einer Sperrposition und einer Freigabeposition bewegbare Sperre (11), wobei die Sperre (11) in der Sperrposition in blockierendem Eingriff mit einem Gegenelement (3) steht, um das Gegenelement (3) gegen eine Drehung zu sichern, und in der Freigabeposition außer Eingriff mit dem Gegenelement (3) steht, und
- ein Überführungselement (12; 52; 82), das bewegbar ist, um die Sperre (11) zwischen der Sperrposition und der Freigabeposition zu überführen,
**gekennzeichnet durch**
- eine Sicherungseinrichtung (13; 53; 83) zum Sichern der Sperre (11) in der Sperrposition, wobei die Sicherungseinrichtung (13; 53; 83) an dem Überführungselement (12; 52; 82) gelagert ist,
wobei das Überführungselement (12; 52; 82) und die Sicherungseinrichtung (13; 53; 83) so ausgestaltet sind, dass eine Bewegung des Überführungselements (12; 52; 82) zum Überführen der Sperre (11) von der Sperrposition in die Freigabeposition eine Relativbewegung zwischen der Sicherungseinrichtung (13; 53; 83) und der Sperre (11) hervorruft, während die Sicherungseinrichtung (13; 53; 83) beim Überführen der Sperre (11) von der Sperrposition in die Freigabeposition in einer ersten Position relativ zu dem Überführungselement (12; 52; 82) bleibt.

2. Verriegelungseinrichtung nach Anspruch 1,
wobei die Sicherungseinrichtung (13; 53; 83) relativ zu dem Überführungselement (12; 52; 82) zwischen der ersten Position und einer zweiten Position bewegbar ist, wobei die Sicherungseinrichtung (13; 53; 83) ausgestaltet ist, um in der ersten Position die Sperre (11) gegen eine Bewegung von der Sperrposition in die Freigabeposition zu sichern, solange das Überführungselement (12; 52; 82) unbewegt ist.

3. Verriegelungseinrichtung nach Anspruch 2, umfassend
ein elastisches Vorspannmittel (34; 54), das die Sicherungseinrichtung (13; 53; 83) in die erste, Position vorspannt.

4. Verriegelungseinrichtung nach Anspruch 2 oder 3,
wobei die Sperre (11) entlang einer Achse translatorisch bewegbar gelagert und eingerichtet ist, um die Sicherungseinrichtung (13; 53; 83) abhängig von einer Position der Sperre (11) entlang der Achse selektiv von der ersten Position in die zweite Position zu überführen.

5. Verriegelungseinrichtung nach Anspruch 4,
wobei das Überführungselment (12; 52; 82) um.eine Drehachse (27, 57) drehbar gelagert ist, die parallel zu der Achse ist, und
wobei die Sicherungseinrichotung (13; 53; 83) in einer Ebene senkrecht zu der Drehachse (27; 57) zwischen der ersten Position und der zweiten Position bewegbar ist.

6. Verriegelungseinrichtung nach einem der Ansprüche 1-5,
wobei die Sicherungseinrichtung (13; 83) translatorisch verschiebbar an dem Überführungselement (12; 82) gelagert ist.

7. Verriegelungseinrichtung nach einem der Ansprüche. 1-5,
wobei die Sicherungseinrichtung (53) verschwenkbar an dem Überführungselement (52) ' gelagert ist.

8. Verrieglungseinrichtung nach einem der vorhergehenden Ansprüche,
wobei die Sicherungseinrichtung (13; 53; 83) eine passive Sicherungseinrichtung ist.

9. Verriegelungseinrichtung nach einem der vorhergehenden Ansprüche, wobei wenigstens ein Abschnitt der Sicherungseinrichtung (13; 83) in einem Hohlraum .. (23) des Überführungselements (12; 82) aufgenommen ist.

10. Fahrzeug, umfassend
eine Lenkradwelle (102) und
eine Verriegelungseinrichtung nach einem der vorhergehenden Ansprüche wobei das Gegenelement (3) an der Lenkradwelle (102) angebracht ist und die Verriegelungseinrichtung (10; 50; 80) als Lenkschloss ausgestaltet ist.

11. Verfahren zum Sichern eines Fahrzeugs (100), umfassend die Schritte:
- Antreiben eines Überführungseiements (12; 52; 82) in eine erste Richtung (47; 63), um eine Sperre (11) in eine Sperrposition zu Überführen, in der sie in blockierendem Eingriff mit einem Gegenelement (3) steht, um das Gegenelement (3) gegen eine Drehung zu sichern, und
- Antreiben des Überführungselements (12; 52; 82) in eine zweite Richtung (45), um die sperre (11) in eine Freigabeposition zu überführen, in der sie außer Eingriff mit dem Gegenelement (3) steht; **dadurch gekennzeichnet,**
**dass** an dem Überführungselement (12; 52; 82) eine Sicherungseinrichtung (13; 53; 83) zum Sichern der Sperre (11) in der Sperrposition gelagert ist, und
**dass** beim Antreiben des Überführungselements (12; 52; 82) in die zweite Richtung (45) eine Relativbewegung zwischen der Sicherungseinrichtung (13; 53; 83) und der Sperre (11) hervorgerufen wird, während die Sicherungseinrichtung (13; 53; 83) in einer ersten Position relativ zu dem Überführungselement (12; 52; 82) bleibt.

12. Verfahren nach Anspruch 11,
das mit der Verriegelungseinrichtung nach einem der Ansprüche 1 bis 9 ausgeführt wird.

## Claims

1. Locking device for a vehicle (100), comprising:
- a lock (11) which is movable between a blocking position and a release position, wherein, in the blocking position, the lock (11) is in blocking engagement with a counter element (3) in order to secure the counter element (3) against rotation, and, in the release position, is disengaged from the counter element (3), and
- a transfer element (12; 52; 82) which is movable in order to transfer the lock (11) between the locking position and the release position, **characterized by**
- a securing device (13; 53; 83) for securing the lock (11) in the blocking position, wherein the securing device (13; 53; 83) is mounted on the transfer element (12; 52; 82),
wherein the transfer element (12; 52; 82) and the securing device (13; 53; 83) are configured in such a manner that a movement of the transfer element (12; 52; 82) for transferring the lock (11) from the blocking position into the release position causes a relative movement between the securing device (13; 53; 83) and the lock (11) while the securing device (13; 53; 83) remains in a first position relative to the transfer element (12; 52; 82) during the transfer of the lock (11) from the blocking position into the release position.

2. Locking device according to Claim 1, wherein the securing device (13; 53; 83) is movable relative to the transfer element (12; 52; 82) between the first position and a second position, wherein the securing device (13; 53; 83) is configured in order, in the first position, to secure the lock (11) against a movement from the blocking position into the release position for as long as the transfer element (12; 52; 82) is not moved.

3. Locking device according to Claim 2, comprising an elastic prestressing means (34; 54) which prestresses the securing device (13; 53; 83) into the first position.

4. Locking device according to Claim 2 or 3, wherein the lock (11) is mounted so as to be movable in translational fashion along an axis and is designed in order to transfer the securing device (13; 53; 83) selectively from the first position into the second position depending on a position of the lock (11) along the axis.

5. Locking device according to Claim 4, wherein the transfer element (12; 52; 82) is mounted so as to be rotatable about an axis of rotation (27; 57) which is parallel to the axis, and wherein the securing device (13; 53; 83) is movable between the first position and the second position in a plane perpendicular to the axis of rotation (27; 57) .

6. Locking device according to one of Claims 1-5, wherein the securing device (13; 83) is mounted on the transfer element (12; 82) so as to be displaceable in translational fashion.

7. Locking device according to one of Claims 1-5, wherein the securing device (53) is mounted pivotably on the transfer element (52).

8. Locking device according to one of the preceding claims, wherein the securing device (13; 53; 83) is a passive securing device.

9. Locking device according to one of the preceding claims, wherein at least one portion of the securing device (13; 83) is accommodated in a cavity (23) of the transfer element (12; 82).

10. Vehicle comprising a steering wheel shaft (102) and a locking device according to one of the preceding claims, wherein the counter element (3) is attached to the steering wheel shaft (102), and the locking device (10; 50; 80) is configured as a steering lock.

11. Method for securing a vehicle (100), comprising the following steps:
- driving a transfer element (12; 52; 82) in a first direction (47; 63) in order to transfer a lock (11) into a blocking position in which said lock is in locking engagement with a counter element (3) in order to secure the counter element (3) against rotation, and
- driving the transfer element (12; 52; 82) in a second direction (45) in order to transfer the lock (11) into a release position in which said lock is disengaged from the counter element (3), **characterized in that** a securing device (13; 53; 83) for securing the lock (11) in the blocking position is mounted on the transfer element (12; 52; 82), and **in that**, when the transfer element (12; 52; 82) is driven in the second direction (45), a relative movement is caused between the securing device (13; 53; 83) and the lock (11) while the securing device (13; 53; 83) remains in a first position relative to the transfer element (12; 52; 82).

12. Method according to Claim 11, which is carried out with the locking device according to one of Claims 1 to 9.

## Revendications

1. Dispositif de verrouillage pour un véhicule (100), comprenant :
- un verrou (11) déplaçable entre une position de verrouillage et une position de libération, le verrou (11), dans la position de verrouillage, étant en prise de blocage avec un élément conjugué (3), afin d'empêcher l'élément conjugué (3) de tourner, et dans la position de libération, étant désengagé de l'élément conjugué (3), et
- un élément de transfert (12 ; 52 ; 82) qui peut être déplacé pour transférer le verrou (11) entre la position de verrouillage et la position de libération,
**caractérisé par**
- un dispositif de sécurisation (13 ; 53 ; 83) pour sécuriser le verrou (11) dans la position de verrouillage, le dispositif de sécurisation (13 ; 53 ; 83) étant supporté sur l'élément de transfert (12 ; 52 ; 82),
l'élément de transfert (12 ; 52 ; 82) et le dispositif de sécurisation (13 ; 53 ; 83) étant configurés de telle sorte qu'un déplacement de l'élément de transfert (12 ; 52 ; 82) pour le transfert du verrou (11) de la position de verrouillage dans la position de libération provoque un mouvement relatif entre le dispositif de sécurisation (13 ; 53 ; 83) et le verrou (11), tandis que le dispositif de sécurisation (13 ; 53 ; 83), lors du transfert du verrou (11) de la position de verrouillage dans la position de libération, reste dans une première position par rapport à l'élément de transfert (12 ; 52 ; 82).

2. Dispositif de verrouillage selon la revendication 1,
dans lequel le dispositif de sécurisation (13 ; 53 ; 83) peut être déplacé par rapport à l'élément de transfert (12 ; 52 ; 82) entre la première position et une deuxième position, l'élément de sécurisation (13 ; 53 ; 83) étant configuré pour sécuriser le verrou (11) dans la première position à l'encontre d'un déplacement de la position de verrouillage dans la position de libération tant que l'élément de transfert (12 ; 52 ; 82) n'est pas déplacé.

3. Dispositif de verrouillage selon la revendication 2, comprenant un moyen de précontrainte élastique (34 ; 54) qui précontraint le dispositif de sécurisation (13 ; 53 ; 83) dans la première position.

4. Dispositif de verrouillage selon la revendication 2 ou 3, dans lequel le verrou (11) est supporté de manière à pouvoir être déplacé en translation le long d'un axe et est prévu pour transférer le dispositif de sécurisation (13 ; 53 ; 83) en fonction d'une position du verrou (11) le long de l'axe de manière sélective depuis la première position dans la deuxième position.

5. Dispositif de verrouillage selon la revendication 4, dans lequel l'élément de transfert (12 ; 52 ; 82) est supporté de manière à pouvoir tourner autour d'un axe de rotation (27 ; 57) qui est parallèle à l'axe, et dans lequel le dispositif de sécurisation (13 ; 53 ; 83) peut être déplacé dans un plan perpendiculaire à l'axe de rotation (27 ; 57) entre la première position et la deuxième position.

6. Dispositif de verrouillage selon l'une quelconque des revendications 1 à 5, dans lequel le dispositif de sécurisation (13 ; 83) est supporté de manière déplaçable en translation sur l'élément de transfert (12 ; 82).

7. Dispositif de verrouillage selon l'une quelconque des revendications 1 à 5, dans lequel le dispositif de sécurisation (53) est supporté de manière pivotante sur l'élément de transfert (52).

8. Dispositif de verrouillage selon l'une quelconque des revendications précédentes, dans lequel le dispositif de sécurisation (13 ; 53 ; 83) est un dispositif de sécurisation passif.

9. Dispositif de verrouillage selon l'une quelconque des revendications précédentes, dans lequel au moins une partie du dispositif de sécurisation (13 ; 83) est reçue dans une cavité (23) de l'élément de transfert (12 ; 82).

10. Véhicule, comprenant
un arbre de volant de direction (102) et
un dispositif de verrouillage selon l'une quelconque des revendications précédentes, l'élément conjugué (3) étant monté sur l'arbre de volant de direction (102) et le dispositif de verrouillage (10 ; 50 ; 80) étant configuré sous forme d'antivol de direction.

11. Procédé pour sécuriser un véhicule (100), comprenant les étapes suivantes :
- entraînement d'un élément de transfert (12 ; 52 ; 82) dans une première direction (47 ; 63), afin de transférer un verrou (11) dans une position de verrouillage dans laquelle il est en prise de blocage avec un élément conjugué (3) afin d'empêcher l'élément conjugué (3) de tourner, et
- entraînement de l'élément de transfert (12 ; 52 ; 82) dans une deuxième direction (45) afin de transférer le verrou (11) dans une position de libération dans laquelle il est désengagé de l'élément conjugué (3) ;
**caractérisé en ce**
**qu'**un dispositif de sécurisation (13 ; 53 ; 83) est supporté sur l'élément de transfert (12 ; 52 ; 82) pour sécuriser le verrou (11) dans la position de verrouillage, et
**que** lors de l'entraînement de l'élément de transfert (12 ; 52 ; 82) dans la deuxième direction (45), un mouvement relatif entre le dispositif de sécurisation (13 ; 53 ; 83) et le verrou (11) est provoqué tandis que le dispositif de sécurisation (13 ; 53 ; 83) reste dans une première position par rapport à l'élément de transfert (12 ; 52 ; 82).

12. Procédé selon la revendication 11, réalisé avec un dispositif de verrouillage selon l'une quelconque des revendications 1 à 9.
